# EUROPEAN PATENT APPLICATION

(11) **EP 4 636 570 A1**
(43) Date of publication of application: **22.10.2025**
(21) Application number: 24171026.8
(22) Date of filing: 18.04.2024
(51) Int. Cl.: G06F 7/499, G06F 7/544, G06F 17/16

(54) **WINOGRAD CONVOLUTION WITH DYNAMIC SCALING AND OVERFLOW COMPENSATION FOR REDUCED PRECISION LOSS**

(71) Applicant: Huawei Technologies Co., Ltd., Shenzhen, Guangdong 518129 (CN)
(72) Inventor: Shahar, Moshe, 80992 Munich (DE); Cohen, Ehud, 80992 Munich (DE)
(74) Representative: Goddar, Heinz J.

(57) **Abstract**

Systems and methods for performing a Winograd transform operation with reduced precision loss. The Winograd transform operation is performed by iterating over each matrix element of a first matrix (D) and a second matrix (V) of the Winograd transform operation, wherein for each element: when a respective matrix element value exceeds one or more maximum threshold values or one or more minimum threshold values, right-shifting the respective matrix element value by at least one bit, performing a matrix multiplication of the first matrix (D) and second matrix (V) using one or more bitwise operations to obtain a result matrix, iterating over each matrix element of the result matrix, and for each matrix element: multiplying corresponding matrix elements from the first matrix (D) and second matrix (V), left-shifting a multiplication result of the matrix multiplication based on the right-shifting to adjust the result matrix, outputting the adjusted result matrix.

## Description

### BACKGROUND

The present disclosure, in some embodiments thereof, relates to digital signal processing and, more particularly, to a system and method for performing Winograd transform operations with reduced precision loss in for example convolutional neural networks (CNNs) and other deep learning applications. CNNs have achieved remarkable success in various computer vision tasks, such as image classification, object detection, and semantic segmentation. The core operation in CNNs is the convolution operation, which involves sliding a kernel over an input feature map to generate an output feature map. However, the computational complexity of the convolution operation can be high, especially for deep CNNs with a large number of layers and filters.

To address this challenge, various techniques have been proposed to accelerate the convolution operation. One such technique is the Winograd minimal filtering algorithm, which reduces the number of multiplication operations required for convolution. The Winograd algorithm transforms the input feature map and the kernel into the Winograd domain, performs element-wise multiplication, and then transforms the result back to the spatial domain.

However, the Winograd transform operation involves intermediate computations that may lead to numerical instability and precision loss, particularly when using reduced precision arithmetic. This precision loss can accumulate across multiple layers of the CNN and degrade the overall accuracy of the network.

### SUMMARY

According to some embodiments of the present invention there is provided a system for performing a Winograd transform operation with reduced precision loss, comprising: a processor configured to perform the Winograd transform operation to extract one or more features from input data by iterating over each matrix element of a first matrix (U) and a second matrix (V) of the Winograd transform operation, wherein for each element: when a respective matrix element value exceeds one or more maximum threshold values or one or more minimum threshold values, right-shifting the respective matrix element value by at least one bit, performing a matrix multiplication of the first matrix (U) and second matrix (V) using one or more bitwise operations to obtain a result matrix, iterating over each matrix element of the result matrix, and for each matrix element: multiplying corresponding matrix elements from the first matrix (U) and second matrix (V), left-shifting a multiplication result of the matrix multiplication based on the right-shifting to adjust the result matrix, and outputting the adjusted result matrix as an output of the Winograd transform operation.

Optionally, the one or more maximum threshold values and the one or more minimum threshold values are predetermined based on a number of bits used for the matrix elements.

More optionally, the one or more maximum threshold values include two or more of the following: a maximum 8-bit value, a maximum 9-bit value, a maximum 10-bit value, and a maximum 11-bit value, and the one or more minimum threshold values include two or more of the following: a minimum 8-bit value, a minimum 9-bit value, a minimum 10-bit value, and a minimum 11-bit value.

Optionally, wherein when the respective matrix element value exceeds one or more maximum threshold values or one or more minimum threshold values, one or more corresponding overflow flags or counters are set accordingly, the left-shifting is performed based on the one or more corresponding overflow flags or counters.

More optionally, wherein when the respective matrix element value exceeds one or more maximum threshold values or one or more minimum threshold values, one or more corresponding overflow flags or counters are set accordingly, the left-shifting is performed based on the one or more corresponding overflow flags or counters, wherein right-shifting the respective matrix element value comprises two or more of the following:
right-shifting the respective matrix element value by 1 bit and setting the corresponding overflow flag or counter to 1 when the respective matrix element value exceeds the maximum 8-bit value or is below the minimum 8-bit value,
right-shifting the respective matrix element value by 2 bits and setting the corresponding overflow flag or counter to 2 when the respective matrix element value exceeds the maximum 9-bit value or is below the minimum 9-bit value,
right-shifting the respective matrix element value by 3 bits and setting the corresponding overflow flag or counter to 3 when the respective matrix element value exceeds the maximum 10-bit value or is below the minimum 10-bit value, and
right-shifting the respective matrix element value by 4 bits and setting the corresponding overflow flag or counter to 4 when the respective matrix element value exceeds the maximum 11-bit value or is below the minimum 11-bit value.

Optionally, wherein performing the matrix multiplication of the first matrix (U) and second matrix (V) using one or more bitwise operations comprises performing the matrix multiplication using 8-bit arithmetic.

More optionally, wherein left-shifting the multiplication result of the matrix multiplication based on the one or more corresponding overflow flags comprises left-shifting the multiplication result by a number of bits equal to a sum of the corresponding overflow flags from the first matrix (U) and the second matrix (V).

Optionally, the input data comprises weight values and the Winograd transform operation is performed as part of a convolutional neural network (CNN) for deep learning tasks using the weight values.

Optionally, the input data comprises one or more of: images, videos, or audio data.

Optionally, the right-shifting the respective matrix element value scales the respective matrix element value by a factor to prevent clipping and preserve accuracy.

More optionally, the factor is determined based on a number of most significant bits (MSBs) that would be lost due to the clipping.

More optionally, the right-shifting the respective matrix element value is performed selectively for the matrix elements that exceed the one or more maximum threshold values or the one or more minimum threshold values.

Optionally, the left-shifting is pre-scaling of the input data by a predetermined factor before performing the Winograd transform operation and the right shifting is an appliance of an inverse scaling factor to compensate for the pre-scaling.

Optionally, the at least one bit is predetermined to prevent accuracy loss due to least significant bit (LSB) truncation of the input data.

According to some embodiments of the present invention there is provided a method for performing a Winograd transform operation reduced precision loss by a processor, comprising: performing the Winograd transform operation to extract one or more features from input data by iterating over each matrix element of a first matrix (U) and a second matrix (V) of the Winograd transform operation, wherein for each element, when a respective matrix element value exceeds one or more maximum threshold values or one or more minimum threshold values, right-shifting the respective matrix element value by at least one bit, performing a matrix multiplication of the first matrix (U) and second matrix (V) using one or more bitwise operations to obtain a result matrix, iterating over each matrix element of the result matrix, and for each matrix element: multiplying corresponding matrix elements from the first matrix (U) and second matrix (V), left-shifting a multiplication result of the matrix multiplication based on the right-shifting to adjust the result matrix, outputting the adjusted result matrix as an output of the Winograd transform operation.

Each of these programs described herein may be provided on a non-transitory storage medium.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a block diagram of components of a system for performing a Winograd transform operation with reduced precision loss, in accordance with some embodiments;
FIG. 2 is a flowchart of a method of for performing a Winograd transform operation with reduced precision loss, optionally using the system depicted in FIG. 1, in accordance with some embodiments;
FIG. 3 is an example of a Winograd transform operation;
FIG. 4 is a detailed block diagram of an exemplary logical components of a system for performing Winograd convolution with reduced precision loss, in accordance with an embodiment of the present invention; and
FIG. 5 is a schematic illustration of the shifting operations held in a Winograd transform operation with reduced precision loss made according to some embodiments of the present invention.

### DETAILED DESCRIPTION

The present disclosure, in some embodiments thereof, relates to digital signal processing and, more particularly, to a system and method for performing Winograd transform operations with reduced precision loss in for example CNNs and other deep learning applications.

As described above various techniques have been proposed to accelerate convolution operations used in CNNs and other deep learning applications. One such technique is the Winograd minimal filtering algorithm. The Winograd transform operation involves intermediate computations that may lead to numerical instability and precision loss, particularly when using reduced precision arithmetic. This precision loss can accumulate across multiple layers of the CNN and degrade the overall accuracy of the network.

Existing approaches to mitigate precision loss in Winograd convolution often involve using higher precision arithmetic or applying post-processing techniques to the output feature maps. However, these approaches can increase the computational complexity and memory requirements of the CNN.

Therefore, there is a need for a system and method that can perform Winograd transform operations with reduced precision loss while maintaining the computational efficiency of the Winograd algorithm. Embodiments of the present invention address this need by providing a technique for dynamically scaling the intermediate values in the Winograd transform based on overflow conditions and adjusting the final output to compensate for the scaling. This approach enables the use of reduced precision arithmetic, such as 8-bit integer arithmetic, without significant accuracy degradation.

Embodiments of the present invention offer several advantages over prior art techniques. First, it reduces the precision loss in Winograd convolution without requiring higher precision arithmetic or post-processing steps. Second, it maintains the computational efficiency of the Winograd algorithm by using bitwise operations and integer arithmetic. Third, it can be easily integrated into existing CNN frameworks and hardware accelerators that support Winograd convolution.

In summary, the embodiments of the present invention provide a novel and efficient solution for performing Winograd transform operations with reduced precision loss in CNNs and other deep learning applications. It addresses a significant challenge in the field of digital signal processing and has the potential to improve the accuracy and speed of CNNs in various computer vision tasks. The embodiments address the challenge of maintaining accuracy in Winograd convolution operations while using reduced precision arithmetic, which is particularly important in deep learning and computer vision applications.

The system comprises a processor that performs the Winograd convolution operation on data such as an input feature map and weight values. The processor calculates the U matrix based on the input feature map and the V matrix based on the weight values. During the calculation of the U and V matrices, the processor detects overflow conditions and applies shift operations to the matrix elements based on predetermined threshold values. The shift operations are performed to prevent overflow and maintain the precision of the matrix elements.

The method of the invention involves iterating over each element of the U and V matrices and comparing their values against maximum and minimum threshold values corresponding to different bit widths. If an element value exceeds the threshold, it is right-shifted by a predetermined number of bits, and an overflow flag is set accordingly. Overflow is marked and used to control the left-shifting operation applied to the U*V result, ensuring that the final output maintains its accuracy.

The invention provides several advantages over prior art techniques. By dynamically scaling the matrix element values based on overflow conditions and adjusting the U*V result accordingly, the system achieves reduced precision loss while maintaining computational efficiency. The use of reduced precision arithmetic, such as 8-bit integer arithmetic, allows for faster computation and lower memory bandwidth requirements.

The system and method of the invention are particularly suitable for deep learning applications, such as CNNs, where the Winograd convolution operation is commonly used. By reducing precision loss, the use of reduced precision arithmetic in CNNs is enabled without sacrificing accuracy, leading to improved performance and efficiency.

Furthermore, at least some of the embodiments provide flexibility in handling different bit widths and allows for the selective application of shift operations based on overflow conditions. This adaptability makes the invention suitable for a wide range of hardware platforms and enables its integration into existing deep learning frameworks and accelerators.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

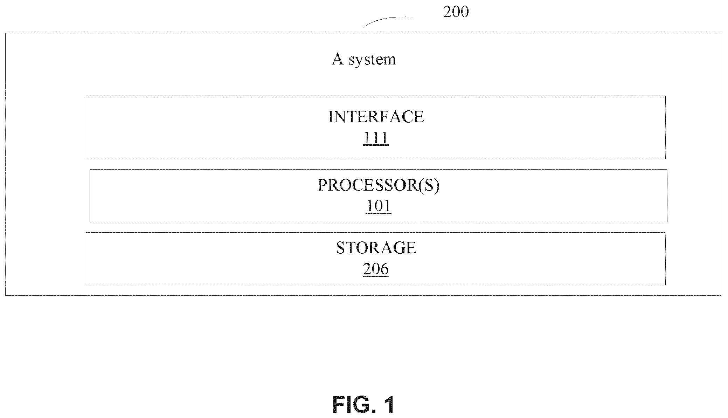

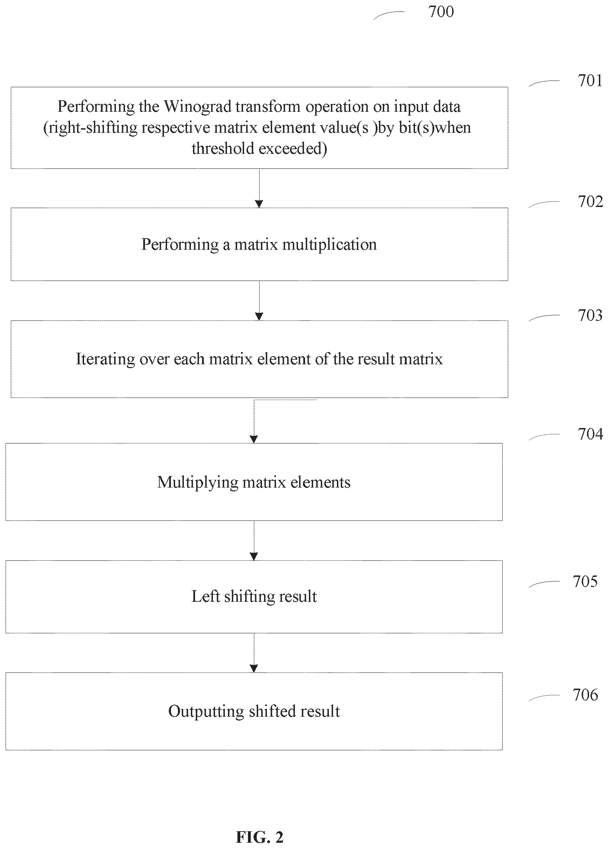

Reference is also made to FIG. 1, which is a block diagram of components of a system (200) for performing a Winograd transform operation with reduced precision loss, in accordance with some embodiments. Reference is now made to FIG. 2, which is a flowchart of a method of for performing a Winograd transform operation with reduced precision loss, in accordance with some embodiments. System 200 may implement the acts of the method described with reference to FIG. 1, by processor(s) (101) of one or more computing devices executing code instructions stored in a memory 206. The computing device(s) may be any computing devices, including virtual computing nodes executed on a cloud computing service.

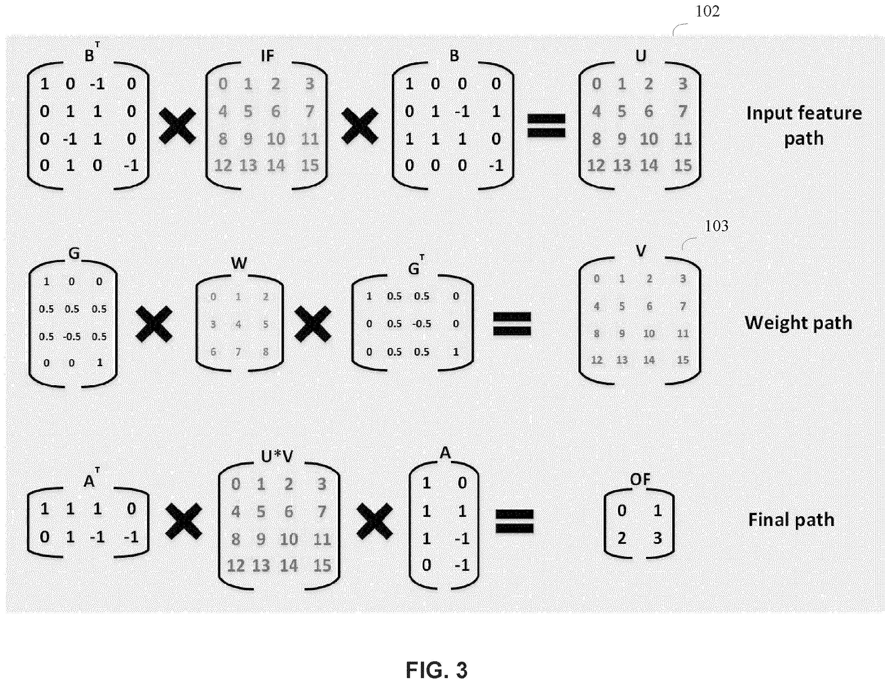

Referring to FIG. 1, together with FIG. 3 which is an example of a Winograd transform operation, the system (100) includes the processor(s) (101) that performs the Winograd transform operation by iterating over each matrix element of a first matrix (U) (102) and a second matrix (V) (103). The first matrix (U) (102) and the second matrix (V) (103) are stored the memory (206) accessible by the processor (101).

During the iteration, the processor (101) compares each matrix element value to one or more maximum threshold values and one or more minimum threshold values. If a respective matrix element value exceeds the maximum threshold values or falls below the minimum threshold values, the processor (101) right-shifts the respective matrix element value by at least one bit.

The processor then performs a matrix multiplication of the first matrix (U) and the second matrix (V) using one or more bitwise operations to obtain a result matrix. The result matrix is stored in the storage (206).

Next, the processor (101) iterates over each matrix element of the result matrix. For each matrix element, the processor (101) multiplies corresponding matrix elements from the first matrix (U) and the second matrix (V). The multiplication result undergoes a left-shifting operation based on the previous right-shifting operation to adjust the result matrix.

Finally, the processor (101) outputs the adjusted result matrix as an output of the Winograd transform operation. The adjusted result matrix represents the extracted features from the input data.

The system (100) may further include an input/output interface (111) for receiving the input data and outputting the adjusted result matrix. The input data may comprise various types of data, such as images, videos, or audio data, depending on the specific application.

The storage (206) may also store additional data, such as overflow flags or counters that are set when matrix element values exceed the maximum threshold values or fall below the minimum threshold values. These overflow flags or counters are used to control the left-shifting operation performed on the multiplication result.

In summary, the system (100) performs a Winograd transform operation with reduced precision loss by right-shifting matrix element values that exceed certain thresholds and adjusting the result matrix using left-shifting based on the right-shifting operation. This approach enables the use of reduced precision arithmetic while maintaining the accuracy of the Winograd transform operation.

FIG. 2 illustrates a method (700) for performing a Winograd transform operation with reduced precision loss. The method (700) is executed by the processor (101) of the system (100).

As shown at (701), the method (700) begins by performing the Winograd transform operation on the input data to extract features. This is done by iterating over each matrix element of the first matrix (U) (102) and the second matrix (V) (103). When a respective matrix element value exceeds the maximum threshold values or falls below the minimum threshold values, the processor (101) right-shifts the respective matrix element value by at least one bit.

Next, the method (700) performs a matrix multiplication (701) of the first matrix (U) and the second matrix (V) using one or more bitwise operations to obtain the result matrix.

The method (700) then iterates (703) over each matrix element of the result matrix. For each matrix element, the method (700) multiplies (704) corresponding matrix elements from the first matrix (U) and the second matrix (V) (704).

The multiplication result is then left-shifted (705) based on the previous right-shifting operation to adjust the result matrix.

Finally, the method (700) outputs (706) the adjusted result matrix as an output of the Winograd transform operation.

The above described process offers several benefits over prior art techniques. By dynamically scaling the matrix element values based on overflow conditions and adjusting the result matrix accordingly, the system (100) and method (700) can effectively reduce precision loss in Winograd transform operations. The use of bitwise operations and reduced precision arithmetic, such as 8-bit integer arithmetic, enables the system (100) to maintain computational efficiency while minimizing accuracy degradation. This is particularly advantageous for resource-constrained devices or applications that require real-time processing.

Furthermore, the selective right-shifting of matrix element values that exceed the maximum or minimum threshold values helps to prevent clipping and preserve accuracy. The scaling factor used in the right-shifting operation can be determined based on the number of most significant bits (MSBs) that would be lost due to clipping, ensuring optimal precision retention.

The system (100) and method (700) can be easily integrated into existing CNN frameworks and hardware accelerators that support Winograd convolution. This compatibility allows for seamless adoption and deployment in various deep learning applications.

Moreover, the pre-scaling of input data by a predetermined factor before performing the Winograd transform operation and the subsequent application of an inverse scaling factor to compensate for the pre-scaling further enhance the precision and accuracy of the results. This pre-scaling technique helps to prevent accuracy loss due to least significant bit (LSB) truncation of the input data.

Optionally, the processor (101) is configured to adapt the threshold values according to the bit width of the matrix elements. This allows for optimal utilization of the available bit range and ensures that the right-shifting operation is performed only when necessary. By dynamically adjusting the threshold values based on the bit width, the system can effectively balance precision and computational efficiency, minimizing the loss of significant bits during the Winograd transform operation.

For example, the system refines the threshold values used for different bit widths of the matrix elements. The processor (101) is configured to store and utilize specific maximum and minimum threshold values for 8-bit, 9-bit, 10-bit, and 11-bit matrix elements. These threshold values are predetermined and optimized for each bit width scenario. By providing granular control over the threshold values based on the actual bit width of the matrix elements, the system can maximize precision retention while maintaining computational efficiency. The processor (101) compares the matrix element values against the corresponding threshold values based on their bit width, ensuring the most appropriate right-shifting operation is applied.

Optionally, the overflow flags or counters that are set to document when the matrix element values exceed the maximum or minimum threshold values. The processor (101) is configured to set these flags or increment the counters whenever a matrix element value falls outside the acceptable range defined by the threshold values. The overflow flags or counters (112) serve as indicators of the right-shifting operation and are stored in the storage (206). The processor (101) uses these flags or counters to control the subsequent left-shifting operation during the adjustment of the result matrix (108). By efficiently managing the overflow conditions using flags or counters, the system ensures that the appropriate scaling and adjustment is applied to maintain the accuracy of the Winograd transform operation.

Optionally, the right-shifting operation performed by the processor (101) is based on the overflow flags or counters (112). When a matrix element value exceeds the maximum or minimum threshold value for a specific bit width, the processor (101) right-shifts the matrix element value by a predetermined number of bits and sets the corresponding overflow flag or increments the counter accordingly, The number of bits to be right-shifted and the values set in the overflow flags or counters are specified for each bit width scenario, such as 8-bit, 9-bit, 10-bit, and 11-bit. This precise control over the right-shifting operation enables accurate scaling and adjustment of the matrix element values, ensuring optimal precision retention during the Winograd transform operation.

Optionally, the matrix multiplication operation is performed by the processor (101) between the first matrix (U) and the second matrix (V). The matrix multiplication is carried out using 8-bit arithmetic, which is a reduced precision compared to higher bit widths. The processor (101) is configured to perform the matrix multiplication using bitwise operations optimized for 8-bit arithmetic. By utilizing reduced precision arithmetic, the system achieves computational efficiency while maintaining acceptable accuracy. This capability allows the system to perform Winograd transform operations efficiently, making it suitable for resource-constrained environments or real-time applications.

Optionally, the left-shifting operation performed by the processor (101) on the multiplication result based on the overflow flags or counters (112). The processor (101) is configured to left-shift the multiplication result by a number of bits equal to the sum of the corresponding overflow flags or counter values from the first matrix (U) and the second matrix (V). This left-shifting operation is performed to compensate for the right-shifting operation applied to the matrix element values. By properly adjusting the multiplication result based on the overflow information, the system ensures that the accuracy of the final output is preserved. The processor (101) uses the stored overflow flags or counters (112) to determine the appropriate number of bits for the left-shifting operation, effectively scaling the multiplication result to maintain precision.

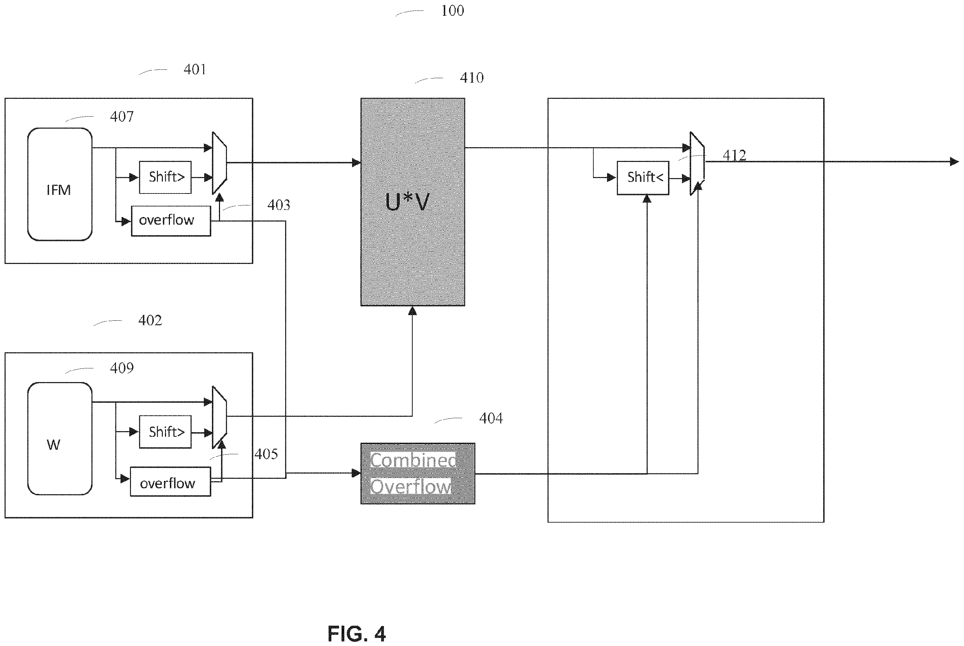

Optionally, the processor (101) is configurred to receive input data comprising weight values through the input/output interface (111), see for example the description below with reference to FIG. 4. These weight values are used as the input data for the Winograd transform operation. The processor (101) performs the Winograd transform operation as part of a CNN, utilizing the weight values to extract features and perform convolution operations. By applying the precision-preserving techniques of the present invention to the weight values in CNNs, the system enables faster and more accurate deep learning inference. The optimized Winograd transform operation performed by the processor (101) enhances the efficiency and accuracy of the CNN, making it suitable for various deep learning applications.

Optionally, the processor (101) scales the matrix element values by a factor during the right-shifting operation to prevent clipping and preserve accuracy. The scaling factor may be determined based on the range of the matrix element values and the desired precision. By applying the appropriate scaling factor, the processor (101) can minimize the loss of significant bits during the right-shifting operation. The scaled matrix element values are then used in the subsequent matrix multiplication and left-shifting operations to maintain the accuracy of the Winograd transform operation. The processor (101) may be configured to analyze the matrix element values and identify the number of most significant bits (MSBs) that would be lost due to clipping if the right-shifting operation were performed without scaling. Based on this analysis, the processor (101) determines the optimal scaling factor that preserves the maximum number of MSBs while still allowing for efficient computation. By dynamically adjusting the scaling factor based on the potential loss of MSBs, the system ensures that the precision of the matrix element values is maintained to the greatest extent possible during the right-shifting operation.

Optionally, selective right-shifting is performed by the processor (101). The processor (101) may analyze each matrix element value and compare it against the maximum and minimum threshold values. The right-shifting operation is performed only for the matrix elements that exceed the maximum threshold values or fall below the minimum threshold values. By selectively applying the right-shifting operation, the processor (101) can optimize the precision-preserving process and reduce computational overhead. Matrix elements that are within the acceptable range defined by the threshold values are left unmodified, avoiding unnecessary right-shifting operations. This selective approach enhances the efficiency of the system while still maintaining the desired level of precision.

Optionally, the processor (101) perform s a pre-scaling operation on the input data by multiplying it with a predetermined factor before performing the Winograd transform operation. The pre-scaling factor is chosen to prevent precision loss during the subsequent computations. After the Winograd transform operation, the processor (101) applies an inverse scaling factor to the result matrix (108) to compensate for the pre-scaling. This inverse scaling operation is performed by right-shifting the result matrix (108) by a number of bits corresponding to the pre-scaling factor. By pre-scaling the input data and applying the inverse scaling factor, the system maintains the accuracy of the final output while utilizing reduced precision arithmetic throughout the Winograd transform operation.

Optionally, the processor (101) is configured to predetermine the number of bits to be right-shifted based on an analysis of the input data and the desired precision. The number of bits is chosen to prevent accuracy loss due to least significant bit (LSB) truncation during the right-shifting operation. By carefully selecting the number of bits, the processor (101) can strike a balance between precision and computational efficiency. The predetermined number of bits ensures that the LSB truncation effects are minimized while still allowing for reduced precision arithmetic. This optimization technique enables the system to maintain the accuracy of the Winograd transform operation while benefiting from the computational advantages of reduced precision.

Reference is also made to FIG. 4 which is a detailed block diagram of an exemplary logical components of a system (100) for performing Winograd convolution with reduced precision loss, in accordance with an embodiment of the present invention. The system (100) comprises a U matrix calculation block (401), a V matrix calculation block (402), an overflow calculation block (403, 405), and a combined overflow block (404). The U matrix calculation block receives an input feature map (IFM) (407) and performs a shift operation based on overflow detection. The shift operation is applied to each element of the U matrix, and the amount of shift is determined by the overflow condition. The overflow flags generated during the U matrix calculation are passed to the respective overflow calculation block (403). The logical components may be implanted on an integrated circuit or in any other fabrication process.

Similarly, the V matrix calculation block (402) receives weight values (W) (409) and performs a shift operation based on overflow detection. The shift operation is applied to each element of the V matrix, and the amount of shift is determined by the overflow condition. The overflow flags generated during the V matrix calculation are passed to the respective overflow calculation block (405).

The overflow calculation block combines the overflow flags from the U matrix calculation block and the V matrix calculation block to generate a combined overflow value (410). This combined overflow value represents the total amount of shift applied to the elements of the U and V matrices.

The U matrix and V matrix, after the shift operations, are multiplied together to obtain a UV result. The UV result then undergoes a shift operation (412) based on the combined overflow value from the overflow calculation block (404). This shift operation adjusts the U*V result to compensate for the shifts applied to the U and V matrices, thereby reducing precision loss.

The output of the system (100) is the final result of the Winograd convolution operation, which is obtained after applying the shift operation to the U*V result based on the combined overflow value.

By detecting overflow conditions and applying shift operations to the U and V matrices, the system reduces precision loss during the Winograd convolution operation. The overflow calculation block combines the overflow information from both matrices to determine the appropriate adjustment to be made to the final U*V result. This approach allows for the use of reduced precision arithmetic while maintaining the accuracy of the convolution operation.

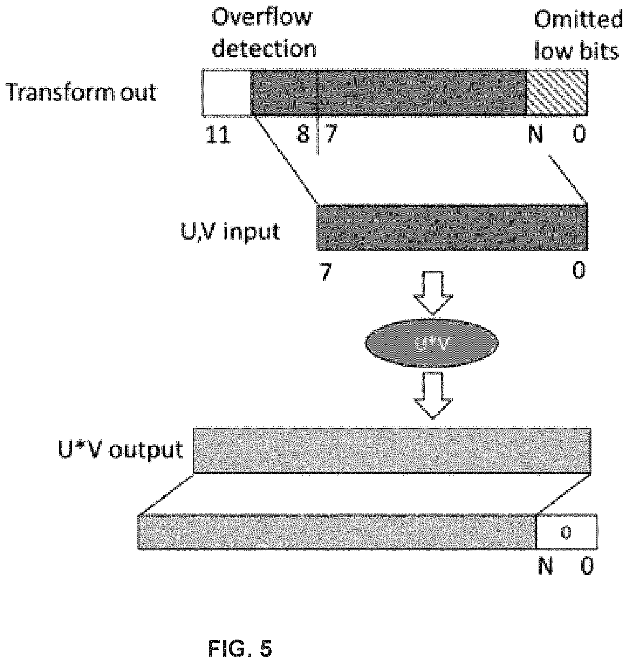

The above described overflow detection and the shifting actions are depicted in FIG. 5 which is a schematic illustration of the shifting operations held in a Winograd transform operation with reduced precision loss made according to some embodiments of the present invention.

The system can be implemented using hardware components such as processors, memory units, and arithmetic logic units (ALUs). The shift operations and overflow detection can be performed using bitwise operations and comparators, respectively. The combined overflow calculation can be achieved using adders or other arithmetic circuits.

Reference is now made to an exemplary Pseudo Code. The following pseudo code illustrates an example implementation of the Winograd transform operation with reduced precision loss, as described in embodiments of the present invention above:

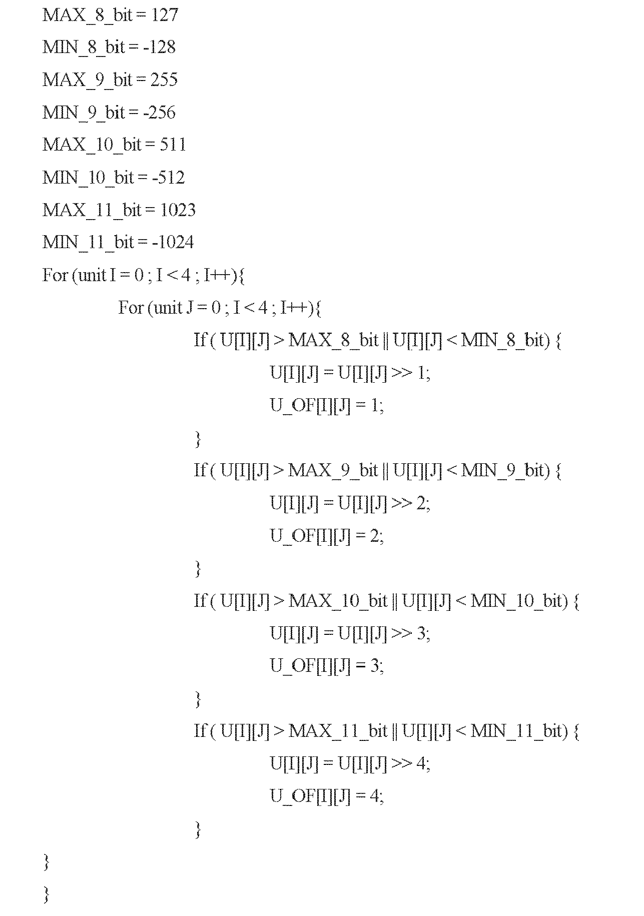

The computing of U*V is done in 8 bit as follow

```
           For (unit I = 0 ; I < 4 ; I ++){
                     For (unit J = 0 ; I < 4 ; I++){
                                U*V_result[I][J] = U[I][J] *
V[I][J] << (U_UF[I][J] + V_OF[I][J]);
```

The pseudo code above demonstrates the process of performing the Winograd transform operation with reduced precision loss. The code first defines the maximum and minimum threshold values for different bit widths (8-bit, 9-bit, 10-bit, and 11-bit).

The code then iterates over each element of the U matrix (and similarly for the V matrix) using nested loops. For each element U[I][J], it checks if the value exceeds the maximum or minimum threshold values for each bit width. If the value exceeds a threshold, it is right-shifted by the corresponding number of bits, and the overflow flag U_OF[I][J] is set accordingly.

After the U and V matrices have been processed and the overflow flags have been set, the code proceeds to compute the matrix multiplication U*V using 8-bit arithmetic. The result of the multiplication is stored in the U*V result matrix.

Finally, the code iterates over each element of the U*V result matrix and left-shifts the value based on the sum of the corresponding overflow flags from the U and V matrices. This left-shift operation adjusts the result to compensate for the right-shifts performed earlier, preserving the accuracy of the Winograd transform operation.

This pseudo code provides a clear example of how the Winograd transform operation may be enhanced with reduced precision loss. By right-shifting the matrix elements that exceed the threshold values and adjusting the result using left-shifts based on the overflow flags, the invention maintains the accuracy of the computation while utilizing reduced precision arithmetic.

The above described embodiments can significantly accelerate deep learning models, particularly CNNs, by enabling faster convolution operations with reduced precision loss. It allows for the use of reduced precision arithmetic, such as 8-bit integer arithmetic, which reduces computational complexity and memory bandwidth requirements, leading to improved performance and efficiency. The invention can be integrated into deep learning frameworks, libraries, and hardware accelerators to speed up the training and inference processes of CNNs. Another usage may be computer vision applications: The invention is highly applicable to computer vision tasks, such as image classification, object detection, semantic segmentation, and facial recognition. By reducing precision loss in Winograd convolution, the invention helps maintain the accuracy of these computer vision models while benefiting from the computational advantages of reduced precision arithmetic. It enables the development of more efficient and accurate computer vision systems for applications like autonomous vehicles, surveillance systems, and medical image analysis. Another option is edge Computing and Internet of Things (IoT) where processing power and memory resources are limited. By reducing the precision loss in Winograd convolution, the invention allows for the deployment of deep learning models on resource-constrained devices, such as smartphones, embedded systems, and IoT devices. It enables real-time inference and analysis on edge devices, opening up possibilities for intelligent and responsive applications in various domains, such as smart homes, industrial automation, and wearable technologies. As indicated above the embodiments can be applied to video processing tasks, such as video classification, action recognition, and object tracking. By performing Winograd convolution with reduced precision loss, the invention enables efficient processing of video frames and extraction of relevant features. It can enhance the performance and accuracy of video analysis systems used in surveillance, sports analytics, and video content understanding. An examiner is augmented reality (AR) and virtual reality (VR) applications, where real-time processing and low latency are crucial. By reducing precision loss in Winograd convolution, the invention allows for faster and more accurate object recognition, tracking, and rendering in AR and VR environments. It can improve the user experience and enable more immersive and interactive AR/VR applications. The adjusted Winograd convolution can be applied to medical imaging tasks, such as image segmentation, anomaly detection, and disease classification. By maintaining accuracy while reducing computational complexity, the invention can assist in the development of more efficient and reliable medical diagnostic systems. It can aid in the analysis of medical images, such as MRI scans, CT scans, and X-rays, enabling faster and more accurate diagnosis and treatment planning. Another option is reducing precision loss in Winograd convolution performed in processing of sensor data and improved accuracy in tasks like object recognition, navigation, and obstacle avoidance. It can enhance the performance and reliability of autonomous vehicles, drones, and industrial robots.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant computing devices will be developed and the scope of the term a processor is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A system (100) for performing a Winograd transform operation with reduced precision loss, comprising:
a processor (101) configured to perform the Winograd transform operation to extract one or more features from input data by iterating over each matrix element of a first matrix (U) and a second matrix (V) of the Winograd transform operation, wherein for each element:
when a respective matrix element value exceeds one or more maximum threshold values or one or more minimum threshold values, right-shifting the respective matrix element value by at least one bit;
performing a matrix multiplication of the first matrix (U) and second matrix (V) using one or more bitwise operations to obtain a result matrix;
iterating over each matrix element of the result matrix, and for each matrix element:
multiplying corresponding matrix elements from the the first matrix (U) and second matrix (V);
left-shifting a multiplication result of the matrix multiplication based on the right-shifting to adjust the result matrix;
outputting the adjusted result matrix as an output of the Winograd transform operation.

2. The system (100) of any of the previous claims, wherein the one or more maximum threshold values and the one or more minimum threshold values are predetermined based on a number of bits used for the matrix elements.

3. The system (100) of claim 2, wherein the one or more maximum threshold values include two or more of the following:
a maximum 8-bit value,
a maximum 9-bit value,
a maximum 10-bit value, and
a maximum 11-bit value, and
the one or more minimum threshold values include two or more of the following:
a minimum 8-bit value,
a minimum 9-bit value,
a minimum 10-bit value, and
a minimum 11-bit value.

4. The system (100) of any of the previous claims, wherein when the respective matrix element value exceeds one or more maximum threshold values or one or more minimum threshold values, one or more corresponding overflow flags or counters are set accordingly; wherein the left-shifting is performed based on the one or more corresponding overflow flags or counters.

5. The system (100) of claim 4, wherein when the respective matrix element value exceeds one or more maximum threshold values or one or more minimum threshold values, one or more corresponding overflow flags or counters are set accordingly; wherein the left-shifting is performed based on the one or more corresponding overflow flags or counters; wherein right-shifting the respective matrix element value comprises two or more of the following:
right-shifting the respective matrix element value by 1 bit and setting the corresponding overflow flag or counter to 1 when the respective matrix element value exceeds the maximum 8-bit value or is below the minimum 8-bit value;
right-shifting the respective matrix element value by 2 bits and setting the corresponding overflow flag or counter to 2 when the respective matrix element value exceeds the maximum 9-bit value or is below the minimum 9-bit value;
right-shifting the respective matrix element value by 3 bits and setting the corresponding overflow flag or counter to 3 when the respective matrix element value exceeds the maximum 10-bit value or is below the minimum 10-bit value; and
right-shifting the respective matrix element value by 4 bits and setting the corresponding overflow flag or counter to 4 when the respective matrix element value exceeds the maximum 11-bit value or is below the minimum 11-bit value.

6. The system (100) of any of the previous claims, wherein performing the matrix multiplication of the first matrix (U) and second matrix (V) using one or more bitwise operations comprises performing the matrix multiplication using 8-bit arithmetic.

7. The system (100) of any one claims 4 and 5, wherein left-shifting the multiplication result of the matrix multiplication based on the one or more corresponding overflow flags comprises left-shifting the multiplication result by a number of bits equal to a sum of the corresponding overflow flags from the first matrix (U) and the second matrix (V).

8. The system (100) of any of the previous claims, wherein the input data comprises weight values and the Winograd transform operation is performed as part of a CNN for deep learning tasks using the weight values.

9. The system (100) of any of the previous claims, wherein the input data comprises one or more of: images, videos, or audio data.

10. The system (100) of any of the previous claims, wherein the right-shifting the respective matrix element value scales the respective matrix element value by a factor to prevent clipping and preserve accuracy.

11. The system (100) of claim 9, wherein the factor is determined based on a number of most significant bits (MSBs) that would be lost due to the clipping.

12. The system (100) of claim 9, wherein the right-shifting the respective matrix element value is performed selectively for the matrix elements that exceed the one or more maximum threshold values or the one or more minimum threshold values.

13. The system (100) of any of the previous claims, wherein the left-shifting is pre-scaling of the input data by a predetermined factor before performing the Winograd transform operation and the right shifting is an appliance of an inverse scaling factor to compensate for the pre-scaling.

14. The system (100) of any of the previous claims, wherein the at least one bit is predetermined to prevent accuracy loss due to least significant bit (LSB) truncation of the input data.

15. A method (700) for performing a Winograd transform operation reduced precision loss by a processor, comprising: performing the Winograd transform operation to extract one or more features from input data by iterating over each matrix element of a first matrix (U) and a second matrix (V) of the Winograd transform operation, wherein for each element:
when a respective matrix element value exceeds one or more maximum threshold values or one or more minimum threshold values, right-shifting the respective matrix element value by at least one bit;
performing (701) a matrix multiplication of the first matrix (U) and second matrix (V) using one or more bitwise operations to obtain a result matrix;
iterating (702) over each matrix element of the result matrix, and for each matrix element:
multiplying (703) corresponding matrix elements from the the first matrix (U) and second matrix (V);
left-shifting (704) a multiplication result of the matrix multiplication based on the right-shifting to adjust the result matrix;
outputting (705) the adjusted result matrix as an output of the Winograd transform operation.

## Amended claims

### Amended claims in accordance with Rule 137(2) EPC.

1. A system (100) for performing a Winograd transform operation with reduced precision loss, comprising:
a processor (101) configured to perform the Winograd transform operation to extract one or more features from input data by:
iterating over each matrix element of a first matrix (U) and a second matrix (V) of the Winograd transform operation and modifying the first matrix (U) and the second matrix (V), such that, for each element:
when a respective matrix element value exceeds one or more maximum threshold values or falls below one or more minimum threshold values, right-shifting the respective matrix element value by at least one bit;
after modifying the first matrix (U) and the second matrix (V), performing a matrix multiplication of the first matrix (U) and the second matrix (V) using one or more bitwise operations to obtain a result matrix;
iterating over each matrix element of the result matrix, and for each matrix element:
left-shifting a multiplication result of the matrix multiplication based on the right-shifting to adjust the result matrix;
outputting the adjusted result matrix as an output of the Winograd transform operation.

2. The system (100) of any of the previous claims, wherein the one or more maximum threshold values and the one or more minimum threshold values are predetermined based on a number of bits used for the matrix elements.

3. The system (100) of claim 2, wherein the one or more maximum threshold values include two or more of the following:
a maximum 8-bit value,
a maximum 9-bit value,
a maximum 10-bit value, and
a maximum 11-bit value, and
the one or more minimum threshold values include two or more of the following:
a minimum 8-bit value,
a minimum 9-bit value,
a minimum 10-bit value, and
a minimum 11-bit value.

4. The system (100) of any of the previous claims, wherein when the respective matrix element value exceeds one or more maximum threshold values or one or more minimum threshold values, one or more corresponding overflow flags or counters are set accordingly; wherein the left-shifting is performed based on the one or more corresponding overflow flags or counters.

5. The system (100) of claim 4, wherein when the respective matrix element value exceeds one or more maximum threshold values or one or more minimum threshold values, one or more corresponding overflow flags or counters are set accordingly; wherein the left-shifting is performed based on the one or more corresponding overflow flags or counters; wherein right-shifting the respective matrix element value comprises two or more of the following:
right-shifting the respective matrix element value by 1 bit and setting the corresponding overflow flag or counter to 1 when the respective matrix element value exceeds the maximum 8-bit value or is below the minimum 8-bit value;
right-shifting the respective matrix element value by 2 bits and setting the corresponding overflow flag or counter to 2 when the respective matrix element value exceeds the maximum 9-bit value or is below the minimum 9-bit value;
right-shifting the respective matrix element value by 3 bits and setting the corresponding overflow flag or counter to 3 when the respective matrix element value exceeds the maximum 10-bit value or is below the minimum 10-bit value; and
right-shifting the respective matrix element value by 4 bits and setting the corresponding overflow flag or counter to 4 when the respective matrix element value exceeds the maximum 11-bit value or is below the minimum 11-bit value.

6. The system (100) of any of the previous claims, wherein performing the matrix multiplication of the first matrix (U) and the second matrix (V) using one or more bitwise operations comprises performing the matrix multiplication using 8-bit arithmetic.

7. The system (100) of any one claims 4 and 5, wherein left-shifting the multiplication result of the matrix multiplication based on the one or more corresponding overflow flags comprises left-shifting the multiplication result by a number of bits equal to a sum of the corresponding overflow flags from the first matrix (U) and the second matrix (V).

8. The system (100) of any of the previous claims, wherein the input data comprises weight values and the Winograd transform operation is performed as part of a CNN for deep learning tasks using the weight values.

9. The system (100) of any of the previous claims, wherein the input data comprises one or more of: images, videos, or audio data.

10. The system (100) of any of the previous claims, wherein the right-shifting the respective matrix element value scales the respective matrix element value by a factor to prevent clipping and preserve accuracy.

11. The system (100) of claim 9, wherein the factor is determined based on a number of most significant bits (MSBs) that would be lost due to the clipping.

12. The system (100) of claim 9, wherein the right-shifting the respective matrix element value is performed selectively for the matrix elements that exceed the one or more maximum threshold values or the one or more minimum threshold values.

13. The system (100) of any of the previous claims, wherein the left-shifting is pre-scaling of the input data by a predetermined factor before performing the Winograd transform operation and the right shifting is an appliance of an inverse scaling factor to compensate for the pre-scaling.

14. The system (100) of any of the previous claims, wherein the at least one bit is predetermined to prevent accuracy loss due to least significant bit (LSB) truncation of the input data.

15. A method (700) for performing a Winograd transform operation reduced precision loss by a processor, comprising:
performing the Winograd transform operation to extract one or more features from input data by iterating over each matrix element of a first matrix (U) and a second matrix (V) of the Winograd transform operation and modifying the first matrix (U) and the second matrix (V), such that, for each element:
when a respective matrix element value exceeds one or more maximum threshold values or falls below one or more minimum threshold values, right-shifting the respective matrix element value by at least one bit;
after modifying the first matrix (U) and the second matrix (V), performing (701) a matrix multiplication of the first matrix (U) and second matrix (V) using one or more bitwise operations to obtain a result matrix;
iterating (702) over each matrix element of the result matrix, and for each matrix element:
left-shifting (704) a multiplication result of the matrix multiplication based on the right-shifting to adjust the result matrix;
outputting (705) the adjusted result matrix as an output of the Winograd transform operation.
